# FASCICULE DE BREVET EUROPEEN

(11) **EP 3 453 597 B1**
(45) Date de publication et mention de la délivrance du brevet: **15.07.2020**
(21) Numéro de dépôt: 18193228.6
(22) Date de dépôt: 07.09.2018
(51) Int. Cl.: B62D 25/08, B62D 29/04, B62D 29/00

(54) **PIÈCE MONOBLOC FORMANT UN BLOC AVANT COMPORTANT UN SYSTÈME D'ABSORPTION ET UN SYSTÈME AÉRODYNAMIQUE**
MONOBLOCKTEIL, DAS EIN FRONTMODUL BILDET, WELCHES EIN ABSORPTIONSSYSTEM UND EIN AERODYNAMISCHES SYSTEM UMFASST
SINGLE-PIECE UNIT FORMING A FRONT UNIT HAVING AN ABSORPTION SYSTEM AND AN AERODYNAMIC SYSTEM

(30) Priorité: 07.09.2017 FR 1758255
(43) Date de publication de la demande: 13.03.2019
(73) Titulaire: Compagnie Plastic Omnium, 69007 Lyon (FR)
(72) Inventeur: GINJA, Stéphane, 01500 Amberieu en Bugey (FR)
(74) Mandataire: LLR

(56) Documents cités:
- WO-A1-2015/165939
- WO-A1-2017/109647
- FR-A1- 2 981 887
- FR-A1- 3 038 290

## Description

La présente invention concerne le domaine des véhicules automobiles. En particulier, l'invention concerne un module de blocs avant pour véhicules automobiles.

On connait déjà dans l'état de la technique, notamment du document WO2006/100379, un bloc avant de véhicule automobile comprenant notamment une face avant technique supportant des éléments fonctionnels tels qu'un système de refroidissement (radiateur), une peau de pare-chocs ou encore des éléments optiques, et un système d'absorption d'énergie.

On connaît aussi par le document FR 2 981 887 A1, qui est considéré comme étant l'état de la technique le plus proche, un assemblage formant un bloc avant pour véhicule automobile comprenant une partie structurelle constituant un système d'absorption d'énergie, et une partie semi-structurelle venue de moulage formant au moins un système aérodynamique avec des passages d'air.

De plus, le FR 3 038 290 divulgue un assemblage formant un bloc avant pour véhicule automobile comprenant un système d'absorption d'énergie, et un système aérodynamique.

Un système d'absorption d'énergie comprend au moins une poutre de chocs, pour transmettre des efforts vers les longerons du véhicule. Une telle poutre est généralement appelée « poutre choc haute » ou « poutre choc supérieure », et elle est positionnée devant la face avant technique. Ce système comporte généralement également un système de protection des chocs piétons (absorbeur voie haute et raidisseur voie basse).

Cette structure de bloc avant regroupe donc des pièces distinctes ayant chacune des spécificités distinctes, notamment la poutre de chocs qui assure un rôle structurel, et la face avant technique qui assure un rôle davantage fonctionnel. Cela peut représenter des difficultés d'assemblage des pièces les unes par rapport aux autres et imposer certaines contraintes sur le style du véhicule. Par exemple, le style de la peau de pare-chocs est impacté par le positionnement de la poutre de chocs pour éviter que l'on voie la poutre de chocs depuis une ouverture d'entrée d'air.

Afin de réduire les émissions de CO2, on peut aussi trouver dans cet environnement un (ou plusieurs) cadre (généralement en plastique), sur lequel sont montés des éléments mobiles, appelés volets d'entrée d'air. Ces éléments font partie d'un système aérodynamique actif dans lequel un actionneur commande la mise en mouvement des éléments mobiles, dont la fonction est d'autoriser l'écoulement de l'air entrant par les grilles du pare-chocs et selon les configurations de vitesse du véhicule, de les obturer.

Ce type de cadre est assemblé sur la poutre choc, dessous, dessus ou dessous et dessus, ce qui complexifie l'assemblage des divers éléments au bloc avant.

De plus, une telle architecture de bloc avant conduit à une redondance de certaines fonctions, découlant sur une multiplicité des pièces, et donc, un alourdissement du bloc avant. Par exemple, le cadre comprend des parois horizontales, et il en est de même pour les guides d'air entre la peau de pare-chocs et le système de refroidissement. Un autre exemple, concerne également le cadre des volets mobiles : ce cadre fait office de structure pour les volets mobiles, alors que dans cet environnement, la poutre de choc et le raidisseur voie basse piéton font également office de structure.

Il apparait donc que les blocs avants connus comportent un ensemble d'éléments qu'il est nécessaire d'assembler au cours d'une multitude d'étapes plus ou moins complexes lors de l'assemblage sur véhicule, et que de nombreuses fonctions réalisées par certains de ces éléments sont redondantes, conduisant à une complexité d'assemblage et un alourdissement du véhicule.

La présente invention a notamment pour but de proposer une pièce monobloc, formant un module de bloc avant de véhicule allégé et dont l'assemblage est simplifié. L'invention concerne ainsi une pièce monobloc formant un module de bloc avant dans lequel des fonctions aérodynamiques (cadre pour volets pilotés), associées à d'autre fonctions aérodynamiques environnantes (volets mobiles), sont intégrées à la poutre choc dans un cadre structurel qui est en partie formé par la poutre choc elle-même.

L'invention concerne une pièce monobloc formant un bloc avant pour véhicule automobile comprenant une partie structurelle constituant un système d'absorption d'énergie, et une partie semi-structurelle venue de moulage formant au moins un système aérodynamique, la partie semi-structurelle étant surmoulée sur la partie structurelle.

La pièce monobloc formant un module de bloc avant selon l'invention procure entre autres les avantages suivants :
- une réduction du nombre de pièces sur le véhicule, fournissant ainsi un système compact, une simplification du flux logistique étant donné qu'il y a moins de références pièces, et une simplification de l'assemblage en usine pour le constructeur (une seule pièce à monter sur le véhicule) ;
- un allègement de la fonction purement aérodynamique car on utilise moins de matière, et on évite la fabrication de cadre redondant avec les parties du cadre déjà désignées dans les pièces existantes pour d'autres fonctions. Par ailleurs, l'allègement est également obtenu par une élimination des fixations entre éléments du bloc avant. Par exemple, la structure des cadres des volets pilotés est réalisée par la pièce monobloc directement (les volets pilotés sont directement clippés sur la pièce monobloc) et la partie semi-structurelle peut faire office directement de cloison et guide d'air.

La pièce monobloc peut en outre comporter l'une ou plusieurs des caractéristiques suivantes, prises seules ou en combinaison :
- le système aérodynamique comporte seul ou en combinaison au moins l'un des éléments suivants : un cadre pour volets pilotés, un guide d'air, un déflecteur sous caisse, un plastron ;
- la partie semi-structurelle est apte à supporter au moins l'un des éléments fonctionnels suivants : un système de refroidissement, une peau de pare-chocs, un élément optique ;
- la partie semi-structurelle est réalisée en matière thermoplastique à base d'au moins l'un des produits suivants : polypropylène (PP), polyamide (PA), polyethylène (PE), polycarbonate et polytéréphtalate de butylène (PC-PBT) ;
- la matière thermoplastique est renforcée par des éléments de renfort ;
- la partie semi-structurelle est réalisée en bi-matière, et comprend des lèvres en matériau de type élastomère ;
- la partie structurelle comporte au moins l'un des éléments suivants : un barreau de poutre choc, un absorbeur de choc du type « crash box », un système de protection des chocs piétons ;
- la partie structurelle comporte un barreau de poutre choc en acier, en aluminium ou en matière composite ;
- la partie semi-structurelle supporte un chargeur batterie et/ou une unité de commande électronique (ECU).

L'invention concerne également un ensemble d'une pièce monobloc selon l'invention et d'au moins l'un des éléments fonctionnels suivants : un système de refroidissement, une peau de pare-chocs, un élément optique.

L'invention concerne également un procédé de fabrication d'une pièce monobloc formant un bloc avant pour véhicule automobile selon l'invention dans lequel on réalise la partie structurelle constituant un système d'absorption d'énergie, puis on surmoule au moyen d'un moule et d'une matière plastique la partie semi-structurelle sur la partie structurelle, de façon à ce que la partie semi-structurelle forme au moins un système aérodynamique.

Le procédé peut en outre comporter l'une ou plusieurs des caractéristiques suivantes, prises seules ou en combinaison :
- le moule est un moule d'injection ;
- on réalise la partie structurelle en réalisant un barreau de poutre choc en acier au moyen d'un procédé choisi seul ou combinaison parmi les procédés suivants :
   profilage (rollforming), hydroformage, emboutissage à froid, emboutissage à chaud ;
- on réalise la partie structurelle en réalisant un barreau de poutre choc en aluminium au moyen d'un procédé choisi seul ou combinaison parmi les procédés suivants :
   emboutissage, extrusion ;
- on réalise la partie structurelle en réalisant un barreau de poutre choc en matière composite au moyen d'un procédé choisi seul ou combinaison parmi les procédés suivants : thermocompression, estampage, extrusion, pultrusion ;
- on introduit le barreau de poutre choc dans le moule en tant qu'insert à surmouler ;
- on améliore l'adhésion mécanique entre la partie structurelle et la partie semi-structurelle, en réalisant des orifices dans la partie structurelle avant surmoulage, afin que la matière plastique de surmoulage flue à travers les orifices ;
- on améliore l'adhésion chimique entre la partie structurelle et la partie semi-structurelle, en réalisant au moins l'une des étapes suivantes : on ajoute un adhésif sur la partie structurelle avant surmoulage par poudrage, spray, colle et/ou film ; on ajoute un adhésif dans une résine de la matière plastique, tel que de l'anhydrique maléique ;
- la partie semi-structurelle est réalisée en une seule étape de surmoulage ;
- la partie semi-structurelle est réalisée en bi-matière dont l'un au moins des matériaux est un matériau de type élastomère ;
- après l'étape de surmoulage, on assemble sur la pièce monobloc des fonctions annexes telles que des volets pilotés, des mécanismes moteurs, des câblages, de l'électronique, des capteurs.

L'invention sera mieux comprise à la lecture des figures annexées, qui sont fournies à titre d'exemples et ne présentent aucun caractère limitatif, dans lesquelles :
- la figure 1 illustre un premier exemple d'une partie structurelle d'une pièce monobloc formant module de bloc avant conforme à l'invention ;
- la figure 2 illustre un premier exemple de pièce monobloc formant module de bloc avant conforme à l'invention, comportant la partie structurelle de la figure 1 ;
- la figure 3 illustre un second exemple d'une partie structurelle d'une pièce monobloc formant module de bloc avant conforme à l'invention ;
- la figure 4 illustre un second exemple de pièce monobloc formant module de bloc avant conforme à l'invention, comportant la partie structurelle de la figure 3 ;
- la figure 5 illustre un troisième exemple de pièce monobloc formant module de bloc avant conforme à l'invention ;
- la figure 6 illustre l'avant d'un véhicule automobile, muni d'une pièce monobloc selon l'invention.

Comme illustré sur les figures, 2, 4, 5 et 6, la pièce monobloc 10 selon l'invention forme un bloc avant pour véhicule automobile et comprend une partie structurelle 20, et une partie semi-structurelle 30.

La partie structurelle 20 comporte au moins l'un des éléments suivants : un barreau de poutre choc 22, un absorbeur de choc du type « crash box » 24, un système de protection des chocs piétons 26 (absorbeur voie haute et raidisseur voie basse).

Lorsque la partie structurelle 20 comporte un barreau de poutre choc 22, ce dernier est avantageusement réalisé en acier, en aluminium ou en matière composite.

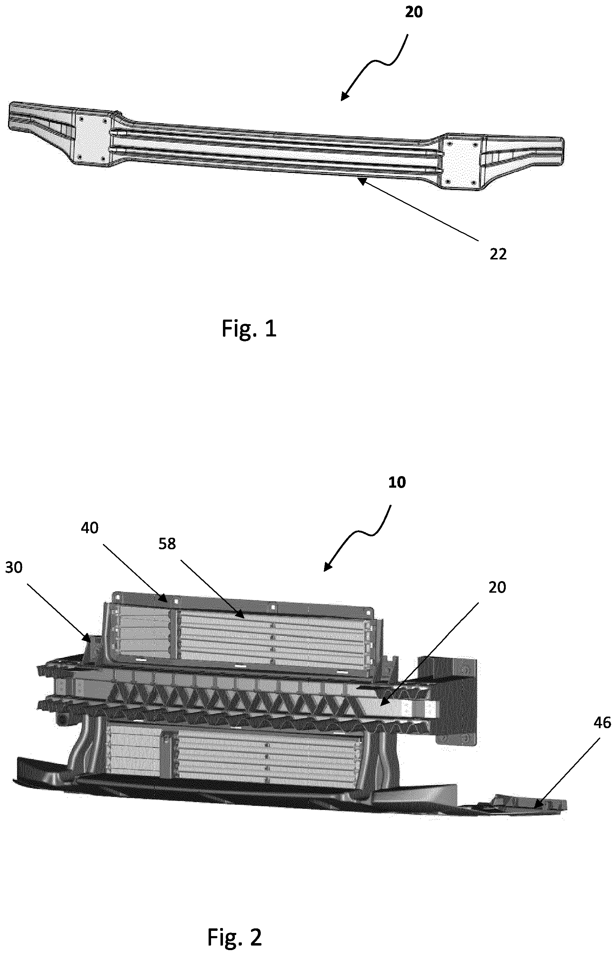

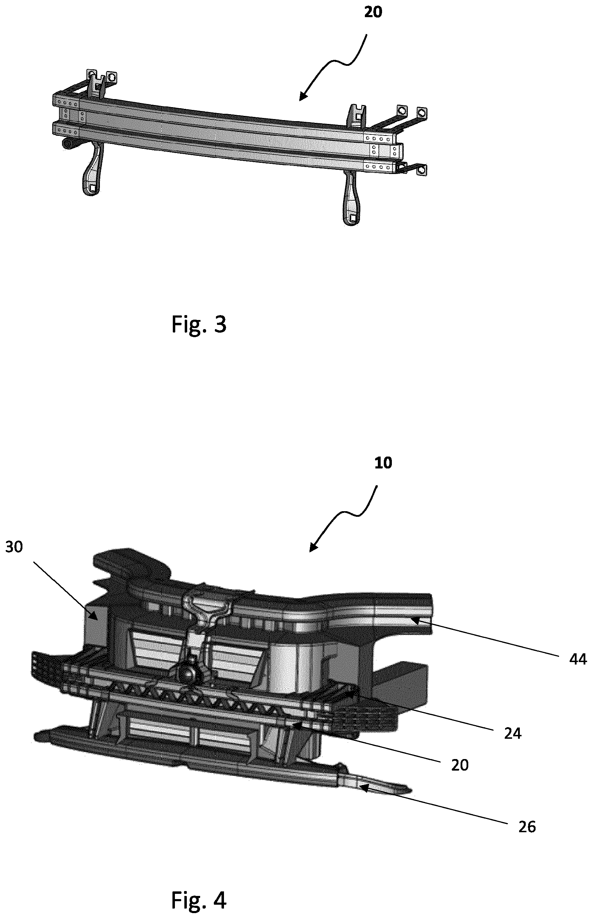

La partie structurelle 20 constitue un système d'absorption d'énergie, tel qu'illustré sur les figures 1 et 3. On qualifie de structurelle un élément apte à absorber un choc subi par le véhicule.

La partie semi-structurelle 30 est venue de moulage, notamment par un procédé de moulage par injection. Au cours de ce moulage par injection, la partie semi-structurelle 30 est surmoulée sur la partie structurelle 20 formant ainsi un insert. Ainsi, les deux parties, structurelle 20 et semi-structurelle 30, forment une seule pièce monobloc 10. On qualifie de semi structurelle un élément qui supporte des fonctions secondaires et n'a pas vocation à absorber des chocs autres que des chocs à faible énergie (choc piéton et choc parking).

La partie semi-structurelle 30 forme au moins un système aérodynamique 40. On entend par système aérodynamique un ensemble de formes aptes à remplir une fonction aérodynamique pour le véhicule, ou à contribuer à une telle fonction. De telles formes peuvent ainsi correspondre à un guide d'air, un cadre pour volets pilotés, ou à un déflecteur sous caisse par exemple. La partie semi-structurelle 30 forme donc, par moulage, au moins l'un de ces éléments : cadre pour volets pilotés 42, guide d'air 44, déflecteur sous caisse 46.

Ainsi, les volets pilotés utilisés sur le véhicule pour réguler l'arrivée d'air à l'avant du véhicule sont directement positionnés sur la partie semi-structurelle 30 venue de moulage (au niveau du cadre 42 venu de moulage). Il n'est donc plus nécessaire de les monter sur un cadre, lui-même assemblé sur le bloc avant. De plus, en cas de recul de la poutre choc 22 lors d'un choc, les volets pilotés suivent vers l'arrière du véhicule.

Ainsi, la partie semi-structurelle forme des éléments utiles pour le système aérodynamique global du véhicule.

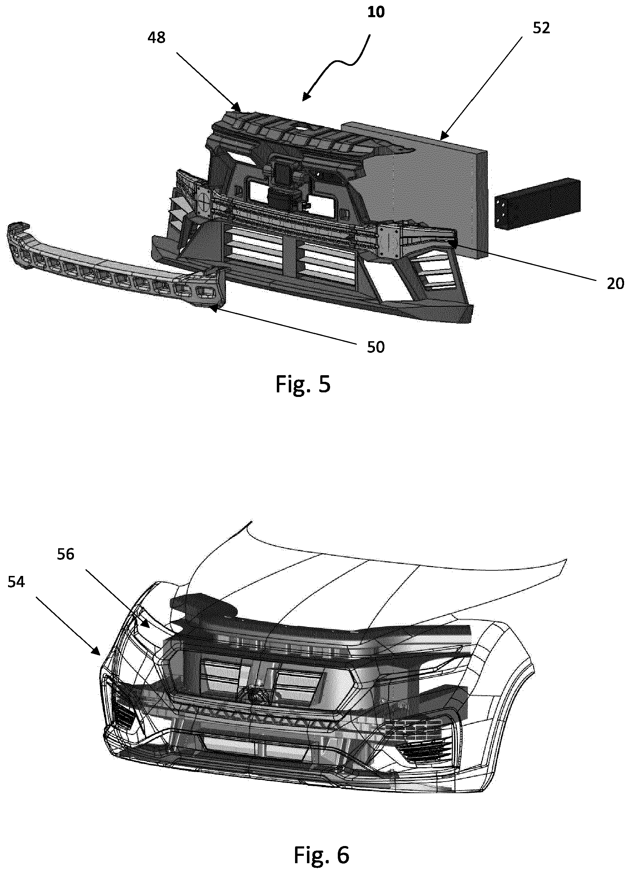

Selon un mode de réalisation, la partie semi-structurelle 30 supporte au moins l'un des éléments fonctionnels 50 suivants, éléments fonctionnels pris seul ou en combinaison : un système de refroidissement 52 (voir figure 5), tel qu'un radiateur, une peau de pare-chocs 54 (voir figure 6), un élément optique 56 (voir figure 6).

Avantageusement, la partie semi-structurelle 30 supporte un chargeur batterie. Cette disposition est particulièrement avantageuse lorsque le véhicule est un véhicule électrique. Ce chargeur peut être directement intégré dans partie semi-structurelle 30, la partie semi-structurelle 30 surmoulant par exemple le chargeur.

Avantageusement, la partie semi-structurelle 30 supporte une unité de commande électronique, ou electronic control unit (ECU). Une telle unité est généralement sous la forme d'un boitier, qui est ici supporté par la partie semi-structurelle 30. Cette unité de commande électronique peut être directement intégrée dans la partie semi-structurelle 30, la partie semi-structurelle 30 surmoulant par exemple le boitier de l'unité de commande électronique (ECU).

Selon un exemple, la pièce monobloc 10 intègre des fonctions de renforts de pare-chocs. La pièce 10 peut ainsi être avantageusement préassemblée avec le pare-chocs avant fourniture au constructeur du véhicule.

Selon un exemple, la pièce monobloc 10 intègre des fonctions de renforcement de la rigidité du pare-chocs. La pièce 10 peut ainsi avantageusement intégrer un plastron 48.

La pièce 10 permet ainsi une meilleure gestion de la diversité du véhicule : par exemple, pour une version de base d'un véhicule, les volets pilotés 58 ne sont pas nécessairement montés sur la pièce 10, et le cadre 42 des volets pilotés 58 présent sur la partie semi-structurelle 30 sert alors de guide d'air vers le radiateur. On peut ainsi envisager une montée en gamme par post-assemblage de composants après l'étape de moulage.

De façon avantageuse, la partie semi-structurelle 30 est réalisée en matière thermoplastique, par exemple une matière à base d'au moins l'un des produits suivants : polypropylène (PP), polyamide (PA), polyethylène (PE), polycarbonate et polytéréphtalate de butylène (PC-PBT).

La matière plastique est avantageusement renforcée par des éléments de renforts tels que : des fibres de verre, de carbone ou bien des charges minérales ou naturelles comme du talc.

La figure 2 illustre un premier exemple de pièce monobloc 10 formant module de bloc avant conforme à l'invention. Cette pièce 10 comporte la partie structurelle 20 illustrée sur la figure 1. Comme on peut le constater, la rigidité des cadres 42 des volets pilotés 58 situés sous la poutre choc 22 est offerte par la poutre choc 22 en partie supérieure et le raidisseur piéton en voie basse. Le lien direct de matière entre voie haute et voie basse offre une meilleure tenue mécanique qu'un assemblage qui a tendance à provoquer des concentrations de contraintes.

La figure 4 illustre un second exemple de pièce monobloc 10 formant module de bloc avant conforme à l'invention. Cette pièce 10 comporte la partie structurelle 20 illustrée sur la figure 3. La partie inférieure de la pièce 10 sert de guidage supérieur aux volets mobiles, notamment si on ajoute des nervures, et en partie basse, le convergent voie basse permet de guider l'air entre le pare-chocs et les shutters pilotés. On maximise la surface d'entrée d'air notamment sur le haut (poutre) et le bas (convergent).

La figure 5 illustre un troisième exemple de pièce monobloc 10 formant module de bloc avant conforme à l'invention.

L'invention concerne également un procédé de fabrication d'une pièce monobloc 10, formant un bloc avant pour véhicule automobile selon l'invention.

Selon ce procédé, on réalise la partie structurelle 20 constituant un système d'absorption d'énergie, puis on surmoule au moyen d'un moule et d'une matière plastique la partie semi-structurelle 30 sur la partie structurelle 20. Le surmoulage est réalisé de façon à ce que la partie semi-structurelle 30 forme au moins un système aérodynamique 40.

Pour réaliser le surmoulage, on utilise de préférence, un moule d'injection.

La partie structurelle 20 est réalisée en fabriquant au moins un barreau de poutre choc 22. Puis ce barreau de poutre choc 22 est introduit dans le moule en tant qu'insert à surmouler. Différentes techniques peuvent être utilisées pour fabriquer le barreau 22, en fonction de la matière utilisée.

Selon un premier exemple de réalisation, le barreau de poutre choc 22 est réalisé en acier au moyen d'un procédé choisi seul ou combinaison parmi les procédés suivants : profilage (rollforming), hydroformage, emboutissage à froid, emboutissage à chaud.

Selon un second exemple de réalisation, le barreau de poutre choc 22 est réalisé en aluminium au moyen d'un procédé choisi seul ou combinaison parmi les procédés suivants : emboutissage, extrusion.

Selon un troisième exemple de réalisation, le barreau de poutre choc 22 est réalisé en matière composite au moyen d'un procédé choisi seul ou combinaison parmi les procédés suivants : thermocompression, estampage, extrusion, pultrusion.

La pièce10 selon l'invention constitue ainsi une pièce monobloc, formant un module de bloc avant dans lequel des fonctions aérodynamiques sont intégrées à la poutre choc dans un cadre structurel qui est en partie formé par la poutre choc elle-même.

Il est donc important que la partie structurelle 20 et la partie semi-structurelle 30 possèdent une cohésion importante, afin de ne pas se dissocier en cas de choc du véhicule notamment.

Pour ce faire, selon un mode de réalisation, on améliore l'adhésion mécanique entre la partie structurelle 20 et la partie semi-structurelle 30, en réalisant des orifices dans la partie structurelle 20 avant surmoulage, afin que la matière plastique de surmoulage flue à travers les orifices.

Pour améliorer la cohésion entre les deux parties, on peut également, alternativement ou en complément, améliorer l'adhésion chimique entre la partie structurelle 20 et la partie semi-structurelle 30, en réalisant au moins l'une des étapes suivantes :
- on ajoute un adhésif sur la partie structurelle 20 avant surmoulage par poudrage, spray, colle et/ou film ;
- on ajoute un adhésif dans une résine de la matière plastique, tel que de l'anhydrique maléique.

Selon un mode de réalisation, la partie semi-structurelle 30 est réalisée en une seule étape, lors de l'injection. C'est-à-dire que toutes les fonctions portées par la partie semi-structurelle 30 sont moulées en mêmes temps. Ainsi, on intègre différentes fonctions directement dans la pièce monobloc, sans assemblage complémentaire. Il est ainsi possible lors de l'unique étape de surmoulage, de surmouler des supports de capteurs, des guides d'air venu de moulage, le cadre pour les volets mobiles... sans que cela ne nécessite de fixer des supports complémentaires.

Selon un second mode de réalisation, la partie semi-structurelle 30 est réalisée en bi-matière, lors de l'étape d'injection. Ce mode a l'avantage de pouvoir intégrer des lèvres souples qui favorisent l'étanchéité avec le pare choc et/ou le système de refroidissement moteur. Les lèvres souples peuvent être en matériau de type élastomère.

Bien entendu, il est également envisagé de compléter les fonctions de la pièce monobloc 10 par des éléments assemblés 50 ultérieurement à l'étape de surmoulage, tels que : des volets pilotés 58, des mécanismes moteurs, des câblages, de l'électronique, des capteurs...

### NOMENCLATURE

- 10: : pièce monobloc formant un bloc avant pour véhicule automobile
- 20: : partie structurelle de la pièce monobloc 10
- 22: : barreau de poutre choc de la partie structurelle 20
- 24: : absorbeur de choc du type « crash box » de la partie structurelle 20
- 26: : système de protection des chocs piétons de la partie structurelle 20
- 30: : partie semi-structurelle de la pièce monobloc 10
- 40: : système aérodynamique de la partie semi-structurelle 30
- 42: : cadre pour volets pilotés 42 du système aérodynamique 40
- 44: : guide d'air 44 du système aérodynamique 40
- 46: : déflecteur sous caisse du système aérodynamique 40
- 48: : plastron de la pièce monobloc 10
- 50: : éléments fonctionnels 50 supportés par la partie semi-structurelle 30, assemblés sur la pièce 10, ultérieurement à l'étape de surmoulage
- 52: : système de refroidissement des éléments fonctionnels 50
- 54: : peau de pare-chocs des éléments fonctionnels 50
- 56: : élément optique des éléments fonctionnels 50
- 58: : volets pilotés

## Revendications

1. Pièce monobloc (10) formant un bloc avant pour véhicule automobile comprenant une partie structurelle (20) constituant un système d'absorption d'énergie, et une partie semi-structurelle (30) venue de moulage formant au moins un système aérodynamique (40), la partie semi-structurelle (30) étant surmoulée sur la partie structurelle (20).

2. Pièce (10) selon la revendication précédente, dans lequel le système aérodynamique (40) comporte seul ou en combinaison au moins l'un des éléments suivants : un cadre pour volets pilotés (42), un guide d'air (44), un déflecteur sous caisse (46), un plastron (48).

3. Pièce (10) selon l'une des revendications précédentes, dans lequel la partie semi-structurelle (30) est apte à supporter au moins l'un des éléments fonctionnels (50) suivants : un système de refroidissement (52), une peau de pare-chocs (54), un élément optique (56).

4. Pièce (10) selon l'une des revendications précédentes, dans lequel la partie semi-structurelle (30) est réalisée en matière thermoplastique à base d'au moins l'un des produits suivants : polypropylène (PP), polyamide (PA), polyethylène (PE), polycarbonate et polytéréphtalate de butylène (PC-PBT).

5. Pièce (10) selon la revendication précédente, dans lequel la matière thermoplastique est renforcée par des éléments de renfort.

6. Pièce (10) selon l'une des revendications précédentes, dans lequel la partie semi-structurelle (30) est réalisée en bi-matière, et comprend des lèvres en matériau de type élastomère.

7. Pièce (10) selon l'une des revendications précédentes, dans lequel la partie structurelle (20) comporte au moins l'un des éléments suivants : un barreau de poutre choc (22), un absorbeur de choc du type « crash box » (24), un système de protection des chocs piétons (26).

8. Pièce (10) selon l'une des revendications précédentes, dans lequel la partie structurelle (20) comporte un barreau de poutre choc (22) en acier, en aluminium ou en matière composite.

9. Pièce (10) selon l'une des revendications précédentes dans laquelle la partie semi-structurelle supporte un chargeur batterie et/ou une unité de commande électronique (ECU).

10. Ensemble d'une pièce (10) selon l'une des revendications précédentes et d'au moins l'un des éléments fonctionnels (50) suivants : un système de refroidissement (52), une peau de pare-chocs (54), un élément optique (56).

11. Procédé de fabrication d'une pièce monobloc (10) formant un bloc avant pour véhicule automobile selon l'une des revendications 1 à 9, dans lequel on réalise la partie structurelle (20) constituant un système d'absorption d'énergie, puis on surmoule au moyen d'un moule et d'une matière plastique la partie semi-structurelle (30) sur la partie structurelle (20), de façon à ce que la partie semi-structurelle (30) forme au moins un système aérodynamique (40).

12. Procédé selon la revendication précédente, dans lequel le moule est un moule d'injection.

13. Procédé selon l'une des revendications 11 et 12, dans lequel on réalise la partie structurelle (20) en réalisant un barreau de poutre choc (22) en acier au moyen d'un procédé choisi seul ou combinaison parmi les procédés suivants : profilage, hydroformage, emboutissage à froid, emboutissage à chaud.

14. Procédé selon l'une des revendications 11 et 12, dans lequel on réalise la partie structurelle (20) en réalisant un barreau de poutre choc (22) en aluminium au moyen d'un procédé choisi seul ou combinaison parmi les procédés suivants : emboutissage, extrusion.

15. Procédé selon l'une des revendications 11 et 12, dans lequel on réalise la partie structurelle (20) en réalisant un barreau de poutre choc (22) en matière composite au moyen d'un procédé choisi seul ou combinaison parmi les procédés suivants : thermocompression, estampage, extrusion, pultrusion.

16. Procédé selon l'une des revendications 1 à 15, dans lequel on introduit le barreau de poutre choc (22) dans le moule en tant qu'insert à surmouler.

17. Procédé selon l'une des revendications 11 à 16, dans lequel on améliore l'adhésion mécanique entre la partie structurelle (20) et la partie semi-structurelle (30), en réalisant des orifices dans la partie structurelle (20) avant surmoulage, afin que la matière plastique de surmoulage flue à travers les orifices.

18. Procédé selon l'une des revendications 11 à 17, dans lequel on améliore l'adhésion chimique entre la partie structurelle (20) et la partie semi-structurelle (30), en réalisant au moins l'une des étapes suivantes :
- on ajoute un adhésif sur la partie structurelle (20) avant surmoulage par poudrage, spray, colle et/ou film ;
- on ajoute un adhésif dans une résine de la matière plastique, tel que de l'anhydrique maléique.

19. Procédé selon l'une des revendications 11 à 18, dans lequel la partie semi-structurelle (30) est réalisée en une seule étape de surmoulage.

20. Procédé selon l'une des revendications 11 à 19, dans lequel la partie semi-structurelle (30) est réalisée en bi-matière dont l'un au moins des matériaux est un matériau de type élastomère.

21. Procédé selon l'une des revendications 11 à 20, dans lequel après l'étape de surmoulage, on assemble sur la pièce monobloc (10) des fonctions annexes (50) telles que des volets pilotés (58), des mécanismes moteurs, des câblages, de l'électronique, des capteurs.

## Patentansprüche

1. Monoblock-Teil (10), das ein Frontmodul für Kraftfahrzeug bildet, umfassend einen strukturellen Teil (20), der ein Energieabsorptionssystem bildet, und einen halb-strukturellen Teil (30), der angeformt ist und wenigstens ein aerodynamisches System (40) bildet, wobei der halbstrukturelle Teil (30) auf dem strukturellen Teil (20) aufgeformt ist.

2. Teil (10) nach dem vorhergehenden Anspruch, wobei das aerodynamische System (40) allein oder in Kombination wenigstens eines der folgenden Elemente aufweist: einen Rahmen für gesteuerte Klappen (42), eine Luftführung (44), einen Unterbauabweiser (46), einen Panzer (48).

3. Teil (10) nach einem der vorhergehenden Ansprüche, wobei der halbstrukturelle Teil (30) dazu eingerichtet ist, wenigstens eines der folgenden Funktionselemente (50) zu tragen: ein Kühlsystem (52), eine Stoßfängerhaut (54), ein optisches Element (56).

4. Teil (10) nach einem der vorhergehenden Ansprüche, wobei der halbstrukturelle Teil (30) aus thermoplastischem Material auf Basis wenigstens eines der folgenden Stoffe realisiert ist: Polypropylen (PP), Polyamid (PA), Polyethylen (PE), Polycarbonat und Polybutylen-Terephtalat (PC-PBT).

5. Teil (10) nach dem vorhergehenden Anspruch, wobei das thermoplastische Material durch Verstärkungselemente verstärkt ist.

6. Teil (10) nach einem der vorhergehenden Ansprüche, wobei der halbstrukturelle Teil (30) aus zwei Materialien realisiert ist und Lippen aus Material des Elastomertyps umfasst.

7. Teil (10) nach einem der vorhergehenden Ansprüche, wobei der strukturelle Teil (20) wenigstens eines der folgenden Elemente aufweist: eine Stoßfängerstange (22), einen Stoßdämpfer des "Crash-box"-Typs (24), ein Fußgängeraufprallschutzsystem (26) .

8. Teil (10) nach einem der vorhergehenden Ansprüche, wobei der strukturelle Teil (20) eine Stoßfängerstange (22) aus Stahl, aus Aluminium oder aus Verbundmaterial aufweist.

9. Teil (10) nach einem der vorhergehenden Ansprüche, wobei der halbstrukturelle Teil ein Batterieladegerät und/oder ein Steuergerät (ECU) trägt.

10. Anordnung aus einem Teil (10) nach einem der vorhergehenden Ansprüche und aus wenigstens einem der folgenden Funktionselemente (50): ein Kühlsystem (52), eine Stoßfängerhaut (54), ein optisches Element (56).

11. Verfahren zur Herstellung eines Monoblock-Teils (10), das ein Frontmodul für Kraftfahrzeug bildet, nach einem der Ansprüche 1 bis 9, bei dem der strukturelle Teil (20), der ein Energieabsorptionssystem bildet, realisiert wird, und dann mittels eines Formwerkzeugs und eines Kunststoffs der halbstrukturelle Teil (30) auf dem strukturellen Teil (20) aufgeformt wird, so dass der halbstrukturelle Teil (30) wenigstens ein aerodynamisches System (40) bildet.

12. Verfahren nach dem vorhergehenden Anspruch, bei dem das Formwerkzeug ein Einspritzformwerkzeug ist.

13. Verfahren nach einem der Ansprüche 11 und 12, bei dem der strukturelle Teil (20) realisiert wird, in dem eine Stoßfängerstange (22) aus Stahl mittels eines Verfahrens realisiert wird, das allein oder in Kombination aus den folgenden Verfahren ausgewählt ist: Profilieren, Hydroformen, Kalttiefziehen, Heißtiefziehen.

14. Verfahren nach einem der Ansprüche 11 und 12, bei dem, der strukturelle Teil (20) realisiert wird, in dem eine Stoßfängerstange (22) aus Aluminium mittels eines Verfahrens realisiert wird, das allein oder in Kombination aus den folgenden Verfahren ausgewählt ist: Tiefziehen, Extrudieren.

15. Verfahren nach einem der Ansprüche 11 und 12, bei dem der strukturelle Teil (20) realisiert wird, in dem eine Stoßfängerstange (22) aus Verbundmaterial mittels eines Verfahrens realisiert wird, das allein oder in Kombination aus den folgenden Verfahren ausgewählt ist: Thermokomprimieren, Gesenkformen, Extrudieren, Strangziehen.

16. Verfahren nach einem der Ansprüche 1 bis 15, bei dem die Stoßfängerstange (22) in das Formwerkzeug als aufzuformender Einsatz eingeführt wird.

17. Verfahren nach einem der Ansprüche 11 bis 16, bei dem die mechanische Haftung zwischen dem strukturellen Teil (20) und dem halbstrukturellen Teil (30) verbessert wird, indem vor Aufformen Öffnungen in dem strukturellen Teil (20) realisiert werden, damit der Aufformkunststoff durch die Öffnungen hindurchfließt.

18. Verfahren nach einem der Ansprüche 11 bis 17, bei dem die chemische Haftung zwischen dem strukturellen Teil (20) und dem halbstrukturellen Teil (30) verbessert wird, indem wenigstens einer der folgenden Schritte realisiert wird:
- Zugeben eines Klebemittels auf den strukturellen Teil (20) vor Aufformen durch Pulver, Zerstäubungsmittel, Klebstoff und/oder Folie;
- Zugeben eines Klebemittels in ein Harz des Kunststoffs, wie Maleinanhydrid.

19. Verfahren nach einem der Ansprüche 11 bis 18, bei dem der halbstrukturelle Teil (30) in einem einzigen Aufformungsschritt realisiert wird.

20. Verfahren nach einem der Ansprüche 11 bis 19, bei dem der halbstrukturelle Teil (30) aus zwei Materialien ist, bei dem wenigstens eines der Materialien ein Material des Elastomertyps ist.

21. Verfahren nach einem der Ansprüche 11 bis 20, bei dem nach dem Aufformungsschritt, auf dem Monoblock-Teil (10) zusätzliche Funktionen (50) montiert werden, wie gesteuerte Klappen (58), Motormechanismen, Verkabelungen, Elektronik, Sensoren.

## Claims

1. Monobloc part (10) forming a front block for motor vehicle comprising a structural portion (20) forming an energy absorption system, and a moulded semi-structural portion (30) forming at least an aerodynamic system (40), the semi-structural portion (30) being overmoulded on the structural portion (20).

2. Part (10) according to the preceding claim, wherein the aerodynamic system (40) comprises alone or in combination at least one of the following elements: a frame for controlled shutters (42), an air guide (44), a subframe deflector (46), a plate (48).

3. Part (10) according to one of the preceding claims, wherein the semi-structural portion (30) is adapted to support at least one of the following functional elements (50): a cooling system (52), a bumper skin (54), an optical element (56).

4. Part (10) according to one of the preceding claims, wherein the semi-structural portion (30) is made of thermoplastic material based on at least one of the following products: polypropylene (PP), polyamide (PA), polyethylene (PE), polycarbonate and polybutylene terephthalate (PC-PBT).

5. Part (10) according to the preceding claim, wherein the thermoplastic material is reinforced by reinforcement elements.

6. Part (10) according to one of the preceding claims, wherein the semi-structural portion (30) is made of two materials and comprises lips of elastomer type material.

7. Part (10) according to one of the preceding claims, wherein the structural portion (20) comprises at least one of the following elements: a bumper beam bar (22), a "crash box" type shock absorber (24), a pedestrian impact protection system (26).

8. Part (10) according to one of the preceding claims, wherein the structural portion (20) comprises a bumper beam bar (22) made of steel, aluminium or composite material.

9. Part (10) according to one of the preceding claims, wherein the semi-structural portion supports a battery charger and/or an electronic control unit (ECU).

10. Assembly of a part (10) according to one of the preceding claims and at least one of the following functional elements (50): a cooling system (52), a bumper skin (54), an optical element (56).

11. Method for manufacturing a monobloc part (10) forming a front block for motor vehicle according to one of claims 1 to 9, wherein the structural portion (20) forming an energy absorption system is manufactured then, using a mould and a plastic material, the semi-structural portion (30) is overmoulded on the structural portion (20), so that the semi-structural portion (30) forms at least an aerodynamic system (40).

12. Method according to the preceding claim, wherein the mould is an injection mould.

13. Method according to claim 11 or 12, wherein the structural portion (20) is produced by manufacturing a steel bumper beam bar (22) using a method chosen alone or in combination amongst the following methods: rollforming, hydroforming, cold drawing, hot drawing.

14. Method according to claim 11 or 12, wherein the structural portion (20) is produced by manufacturing an aluminium bumper beam bar (22) using a method chosen alone or in combination amongst the following methods: drawing, extrusion.

15. Method according to claim 11 or 12, wherein the structural portion (20) is produced by manufacturing a bumper beam bar (22) made of composite material using a method chosen alone or in combination amongst the following methods: thermocompression, stamping, extrusion, pultrusion.

16. Method according to one of claims 1 to 15, wherein the bumper beam bar (22) is introduced into the mould as an insert to be overmoulded.

17. Method according to one of claims 11 to 16, wherein the mechanical adhesion between the structural portion (20) and the semi-structural portion (30) is improved by making holes in the structural portion (20) before overmoulding, so that the plastic overmoulding material can flow through the holes.

18. Method according to one of claims 11 to 17, wherein the chemical adhesion between the structural portion (20) and the semi-structural portion (30) is improved by performing at least one of the following steps:
- adding an adhesive to the structural portion (20) before overmoulding by powdering, spray, glue and/or film;
- adding an adhesive to a resin of the plastic material, such as maleic anhydride.

19. Method according to one of claims 11 to 18, wherein the semi-structural portion (30) is made in a single overmoulding step.

20. Method according to one of claims 11 to 19, wherein the semi-structural portion (30) is made of two materials, of which at least one is an elastomer type material.

21. Method according to one of claims 11 to 20, wherein after the overmoulding step, secondary functions (50) such as controlled shutters (58), motor mechanisms, wires, electronics and sensors are assembled on the monobloc part (10).
